# NEUE EUROPÄISCHE PATENTSCHRIFT

(11) **EP 2 781 891 B2**
(45) Veröffentlichungstag und Bekanntmachung des Hinweises auf die Entscheidung über den Einspruch: **17.09.2025**
(45) Hinweis auf die Patenterteilung: 09.01.2019
(21) Anmeldenummer: 14160757.2
(22) Anmeldetag: 19.03.2014
(51) Int. Cl.: G01D 21/02, G01D 11/30, G01F 23/296

(54) **Funktionsmodul mit einer Sensorvorrichtung**
Functional module with a sensor device
Module fonctionnel doté d'un dispositif de détection

(30) Priorität: 19.03.2013 DE 202013002615 U
(43) Veröffentlichungstag der Anmeldung: 24.09.2014
(73) Patentinhaber: AST (Advanced Sensor Technologies) International Asset GmbH, 75365 Calw (DE)
(72) Erfinder: Zachmann, Wilfried, 75196 Remchingen (DE)
(74) Vertreter: Winter, Brandl - Partnerschaft mbB

(56) Entgegenhaltungen:
- WO-A1-2010/105375
- WO-A1-98/45673
- DE-A1- 102007 045 179
- DE-A1- 102009 037 345
- JP-A- H07 295 736
- JP-A- H08 152 955
- US-B1- 7 267 322

## Beschreibung

Die vorliegende Erfindung betrifft ein Funktionsmodul mit einer Sensorvorrichtung, und insbesondere einer Sensorvorrichtung zur Erfassung einer Vielzahl von Parametern eines Prozesses.

In industriellen Prozessen und beispielsweise bei vergleichbaren Abläufen in privaten Haushalten ist es erforderlich, verschiedene Parameter eines Prozesses, wie beispielsweise eines chemischen Prozesses oder, in privaten Haushalten, eines Waschablaufs verschiedene Parameter zu überprüfen. Diese dienen einerseits dazu, Veränderungen im jeweiligen Prozess zu erkennen oder auch gezielt einzuleiten und andererseits das Erreichen bestimmter Vorgaben festzustellen. In entsprechenden Einrichtungen, wie beispielsweise in Behältern, in denen der jeweilige Prozess abläuft, ist daher eine Mehrzahl von Sensoren an verschiedenen Stellen in und an dem Behälter vorgesehen. In Abhängigkeit von der Komplexität des Prozesses und der zu überwachenden Parameter ist eine Vielzahl von Sensoren erforderlich, die eine Montage und eine entsprechende Verkabelung erfordern, so dass bei zunehmender Anzahl zu überwachender Parameter der Aufwand zur Bereitstellung der Vielzahl entsprechender Sensoren erheblich ansteigt. Insbesondere ist jeder einzelne Sensor zu fertigen und an einer entsprechenden Position zu montieren und auch mit entsprechenden Anschlussleitungen zu versehen, so dass eine elektrische Ansteuerung zur Durchführung einer Messung und die Auswertung der Erfassungssignale möglich sind.

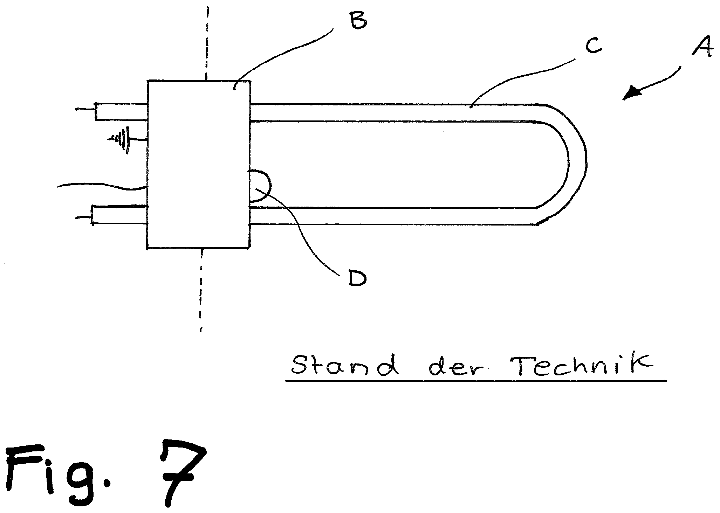

Fig. 7 zeigt eine Heizeinrichtung, wie sie beispielsweise in einer handelsüblichen Wascheinrichtung (Waschmaschine) oder auch in anderen Einrichtungen zur Erwärmung fluider Medien eingesetzt werden kann. Die Heizeinrichtung A umfasst ein Sockelelement B, an welchem auf der einen Seite desselben Heizstäbe C angeordnet sind. Auf der gegenüberliegenden Seite des Sockelelements B bestehen elektrische Anschlüsse für die Heizstäbe C. Zur Erfassung der Temperatur des fluiden Mediums, beispielsweise einer Waschlauge in einer Wascheinrichtung, ist ein Temperatursensor D vorgesehen, der auf der Seite der Heizstäbe C am Sockelelement B angeordnet ist und, in gleicher Weise wie die Heizstäbe C von dem zu erwärmenden Fluid umströmt wird. Es kann somit die Temperatur des Fluids erfasst werden und im Sinne einer Auswertung eine Steuerung oder Regelung der den Heizstäben zuzuführenden elektrischen Leistung erreicht werden.

Die Heizeinrichtung A wird als ein Bauteil hergestellt und wird in eine entsprechende Öffnung eines Behälters zur Aufnahme des zu erwärmenden Mediums eingesetzt. Dies kann beispielsweise ein Laugenbehälter der Wascheinrichtung sein. Somit ist die innere Seite des Sockelelements B mit den Heizstäben und dem Temperatursensor D dem Fluid ausgesetzt, während die andere Seite des Sockelelements zur Bereitstellung der Anschlüsse von außen zugänglich ist. Es erfolgt eine entsprechende Abdichtung.

Weitere Sensoren, die in dem allgemeinen Prozess zur Erfassung verschiedener Parameter erforderlich sind, müssen an anderen Stellen im Behälter angeordnet werden.

Die Dokumente DE102009037345 A1 und WO2010/105375 A1 offenbaren Funktionsmodule gemäß dem stand der Technik.

Der Erfindung liegt demgegenüber die Aufgabe zugrunde, ein Funktionsmodul mit einer Sensorvorrichtung in der Weise aufzubauen, dass eine Mehrzahl von Sensorfunktionen in der Sensorvorrichtung bereitgestellt wird.

Erfindungsgemäß wird diese Aufgabe mit den in den Patentansprüchen angegebenen Merkmalen gelöst.

Das erfindungsgemäße Funktionsmodul zur Erfassung von Parametern eine Mediums in einem Behälter und des Behälters umfasst ein Sockelelement zum Einsetzen des Funktionsmoduls in den Behälter und eine Sensorvorrichtung, die in das Sockelelement eingesetzt ist und zumindest teilweise aus dem Sockelelement herausragt, wobei das Funktionsmodul in den Behälter zur Durchführung der Erfassungen einsetzbar ist, und die Sensorvorrichtung eine Mehrzahl von Sensoreinheiten aufweist zur Erfassung unterschiedlicher Parameter des Mediums .

Es ist auf diese Weise möglich, eine Vielzahl von Sensorfunktionen in der Sensorvorrichtung des Funktionsmoduls vorzusehen, wobei die entsprechende Anzahl der jeweiligen Sensoren zur Erfassung der unterschiedlichen Parameter in der Sensorvorrichtung angeordnet ist (Multisensoranordnung). Die Sensorvorrichtung kann in das Funktionsmodul eingesetzt werden, so dass eine einfache und kostengünstige Herstellung gewährleistet ist. Es ist nicht mehr erforderlich, die Vielzahl der Sensoren zur Erfassung jeweiliger Parameter an verschiedenen Stellen anzuordnen, wobei auch eine aufwendige Verdrahtung einer Vielzahl von an unterschiedlichen Stellen angeordneten Sensoren entfällt. Vielmehr ist die erfindungsgemäße Anordnung mit der Vielzahl der in der Sensorvorrichtung vereinigten Sensoren für eine kostengünstige Herstellung geeignet, wobei sich eine kompakte Ausführung ergibt, die bei geringem Platzbedarf auf einfache Weise hergestellt und in dem Funktionsmodul angeordnet werden kann. Es ergibt sich somit ebenfalls ein sehr kompaktes Funktionsmodul, das auf einfache Weise in eine entsprechende Öffnung in dem Behälter zur Aufnahme des zu erfassenden und beispielsweise zu erwärmenden Fluids eingesetzt werden kann. Dies gewährleistet eine einfache Montage mit lediglich einer Öffnung in dem Behälter, die mit einem vertretbaren Aufwand sicher abgedichtet werden kann.

Die Vielzahl der einzelnen Sensoren in der Sensorvorrichtung kann mittels eines entsprechend gestalteten Steckermoduls auf einfache Weise mit einer Auswertungseinrichtung verbunden werden, so dass auch der Verdrahtungsaufwand und damit die Kosten vermindert werden können. Auch werden weniger Öffnungen in dem Behälter benötigt, so dass eine Abdichtung vereinfacht wird.

Die erfindungsgemäße Sensorvorrichtung sowie das Funktionsmodul mit der Sensorvorrichtung ermöglichen ein einfaches Nachrüsten beispielsweise einer handelsüblichen Wascheinrichtung mit den erweiterten Funktionen und Erfassungsmöglichkeiten, ohne dass größere mechanische Änderungen vorgenommen werden müssen. Es ist lediglich eine allgemeine Auswertungseinrichtung (Steuerungseinrichtung) erforderlich, mittels der die Sensoren angesteuert und die Erfassungsergebnisse ausgewertet werden können.

Weitere Ausgestaltungen der vorliegenden Erfindung sind in den Unteransprüchen angegeben.

Das Sockelelement kann eine innere Seite aufweisen, die nach dem Einsetzen in dem Inneren des Behälters liegt, und eine äußere Seite, die nach dem Einsetzen außerhalb des Behälters liegt, und wobei die Sensorvorrichtung derart in das Sockelelement eingesetzt ist, dass ein äußerer Teil der Sensorvorrichtung außerhalb des Behälters und ein innerer Teil innerhalb des Behälters liegt und vom Medium umströmt wird.

Die Sensorvorrichtung kann eine erste Sensoreinheit aufweisen zur Erfassung einer Temperatur des Mediums, sowie eine zweite Sensoreinheit zur Erfassung eines Füllstands des Mediums in dem Behälter.

Die Sensorvorrichtung kann eine dritte Sensoreinheit aufweisen zur Erfassung einer dreidimensionalen Bewegung des Behälters relativ zu einem festen Punkt sowie eine vierte Sensoreinheit zur Erfassung von Eigenschaften des Mediums.

Die zweite Sensoreinheit kann Ultraschall-Sensorelemente aufweisen zur Erfassung des Füllstands mittels Ultraschallsignalen.

Die dritte Sensoreinheit kann ein Magnetsensorelement aufweisen zur Erfassung eines Magnetfelds eines mit dem festen Punkt verbundenen Magneten zur Erfassung einer Bewegung des Behälters relativ zu dem Magneten.

Die vierte Sensoreinheit kann eine Sensoreinrichtung aufweisen zur Erfassung physikalischer und chemischer Eigenschaften des Mediums mittels der Impedanzspektroskopie und/oder der Leitwertmessung.

Die Sensorvorrichtung kann eine fünfte Sensoreinheit aufweisen, die ein optisches Sensorelement umfasst zur Erfassung einer Trübung des Mediums.

Die Sensorvorrichtung kann eine dritte Sensoreinheit aufweisen zur dreidimensionalen Erfassung einer Bewegung des Behälters, wobei die dritte Sensoreinheit ein Magnetsensorelement aufweist zur Erfassung einer Bewegung des Behälters relativ zu einem festen Punkt außerhalb des Behälters und wobei die dritte Sensoreinheit in dem äußeren Teil der Sensorvorrichtung angeordnet ist.

Die Sensorvorrichtung kann eine dritte Sensoreinheit aufweisen zur dreidimensionalen Erfassung einer Bewegung des Behälters relativ zu einem festen Punkt außerhalb des Behälters, und wobei die dritte Sensoreinheit zumindest einen Beschleunigungssensor aufweist zur Erfassung einer Bewegung des Behälters relativ zu dem festen Punkt und die dritte Sensoreinheit in dem inneren Teil der Sensorvorrichtung angeordnet ist.

Die Sensorvorrichtung kann eine Steuerungseinheit aufweisen zur Ansteuerung der Mehrzahl der Sensoreinheiten und zur Aufnahme der jeweiligen erfassten Parameter des Mediums und des Behälters.

Die Erfindung wird nachstehend anhand von Ausführungsbeispielen unter Bezugnahme auf die Zeichnungen näher erläutert. Es zeigen:
Fig. 1 eine schematische Darstellung der Sensorvorrichtung sowie des Funktionsmoduls in Form einer Heizeinrichtung für eine Wascheinrichtung gemäß einem ersten Ausführungsbeispiel,
Fig. 2 eine schematische Darstellung der Anordnung des Funktionsmoduls gemäß Fig. 1 in einem Laugenbehälter in einer Wascheinrichtung,
Fig. 3 eine schematische Darstellung der Sensorvorrichtung mit der Anordnung einer Vielzahl von einzelnen Sensoreinheiten,
Fig. 4 eine schematische Darstellung eines zweiten Ausführungsbeispiels der Anordnung der Sensorvorrichtung in dem Funktionsmodul,
Fig. 5 eine schematische Darstellung einer alternativen Anordnung der Sensorvorrichtung in dem Funktionsmodul im Vergleich zu Fig. 4,
Fig. 6 eine schematische Darstellung einer alternativen Anordnung der Sensorvorrichtung in dem Funktionsmodul im Vergleich zu Fig. 1, und
Fig. 7 eine Anordnung einer Heizeinrichtung gemäß dem Stand der Technik.

### - Erstes Ausführungsbeispiel

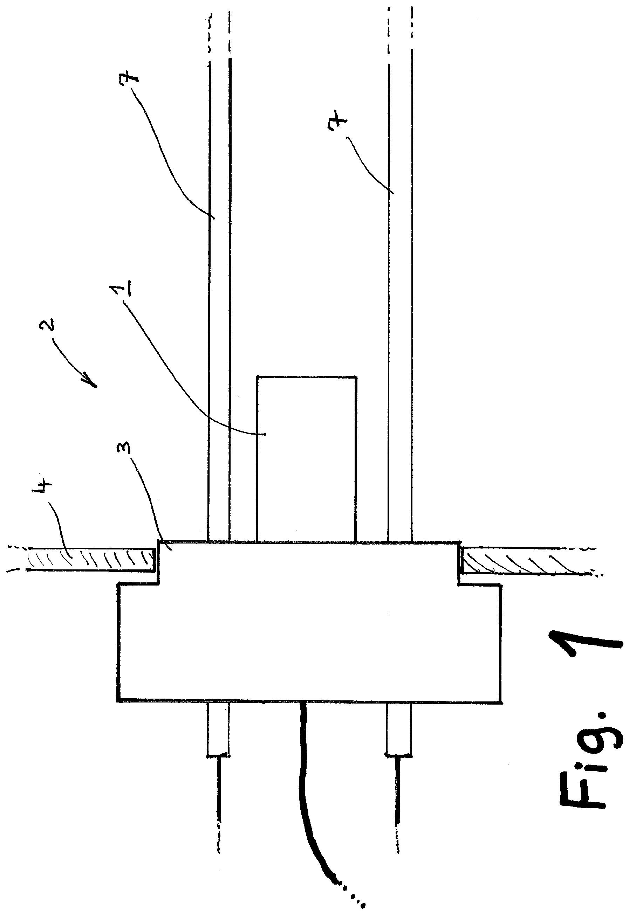

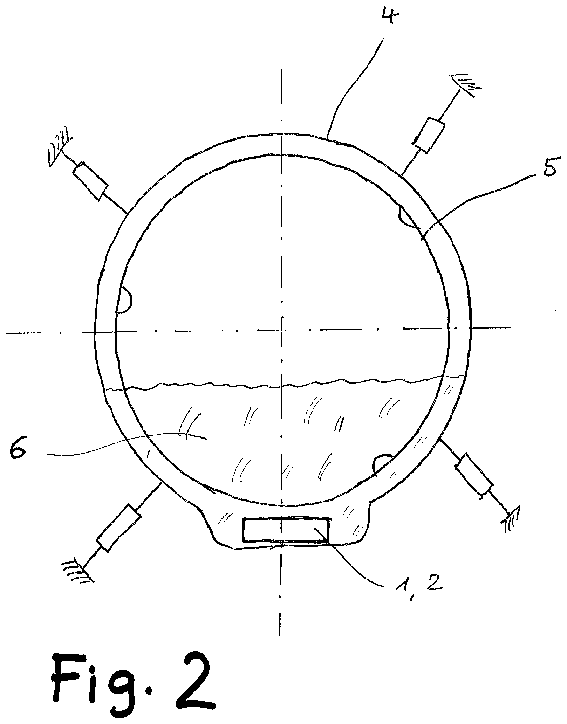

Die vorliegende Erfindung wird nachstehend gemäß einem ersten Ausführungsbeispiel in Verbindung mit den Figuren 1 und 2 beschrieben. Die Beschreibung bezieht sich zur Vereinfachung der Darstellung auf eine Anwendung des Funktionsmoduls in einer Wascheinrichtung.

Fig. 1 zeigt die Anordnung einer Sensorvorrichtung 1, die in ein Funktionsmodul 2 eingesetzt ist. Das Funktionsmodul 2 umfasst ein Sockelelement 3 mittels dessen das Funktionselement in entsprechend abgedichteter Form in eine Öffnung eines Behälters 4 eingesetzt werden kann. Zur Vereinfachung der Darstellung sind in Fig. 1 entsprechende Abdichtungsmaßnahmen nicht gezeigt. Es sind in Fig. 1 Wände des Behälters 4 angedeutet.

Gemäß Fig. 2 ist das Funktionsmodul 2 in einem Laugenbehälter einer Wascheinrichtung eingesetzt, wobei der Laugenbehälter dem Behälter 4 entspricht. Innerhalb des Behälters 4 ist drehbar eine Trommel 5 angeordnet zur Aufnahme eines Waschguts. Schematisch mit einer bestimmten Füllhöhe ist ein Medium 6 dargestellt, das beispielsweise Wasser oder eine Waschlauge nach Hinzufügen eines entsprechenden Waschmittels ist. Die nachfolgende Beschreibung bezieht sich zur Vereinfachung der Darstellung auf das Beispiel einer Waschlauge, wobei die vorliegende Erfindung hierauf jedoch nicht festgelegt ist und vielmehr eine Vielzahl von Fluiden oder Medien 6 in gleicher Weise verwendet und hinsichtlich der Eigenschaften erfasst werden kann. Es werden ferner mit der Sensorvorrichtung 1 Bewegungen des Behälters 4 relativ zu einem außerhalb des Behälters angeordneten festen Punkt erfasst.

Das Funktionsmodul 2 ist im unteren Teil des Behälters 4 angeordnet, so dass es mit sehr großer Wahrscheinlichkeit vollständig von dem Medium (Fluid) 6 umströmt wird.

Gemäß Fig. 1 weist das Funktionsmodul 2 entsprechende elektrische Anschlüsse auf, mittels denen einer Heizeinrichtung 7 (Heizstäbe) elektrische Leistung zugeführt werden kann. Die Sensorvorrichtung 1 ist in das Sockelelement 3 des Funktionsmoduls eingesetzt und befindet sich im Wesentlichen auf der Seite des Sockelelements, die im Innern des Behälters 4 angeordnet und somit dem Medium 6 ausgesetzt ist. Diese Seite wird nachstehend auch als innere Seite des Sockelelements 3 bezeichnet. Die gegenüberliegende Seite des Sockelelements 3 wird als die äußere Seite bezeichnet und ist die Seite, die nach dem Einsetzen in den Behälter 4 aus dem Behälter 4 herausragt und von außen zugänglich ist. An dieser Seite sind die Anschlussleitungen zur Zuführung der elektrischen Leistung zur Heizeinrichtung 7 und die elektrischen Versorgungsleitungen und Datenleitungen zur Sensorvorrichtung 1 angeordnet.

Fig. 2 zeigt die Anordnung des Funktionsmoduls in einer Wascheinrichtung, wobei lediglich der Laugenbehälter (Behälter 4) und die Trommel der Wascheinrichtung gezeigt sind. Über entsprechende Stützelemente ist der Behälter 4 elastisch und damit schwingungsfähig gelagert.

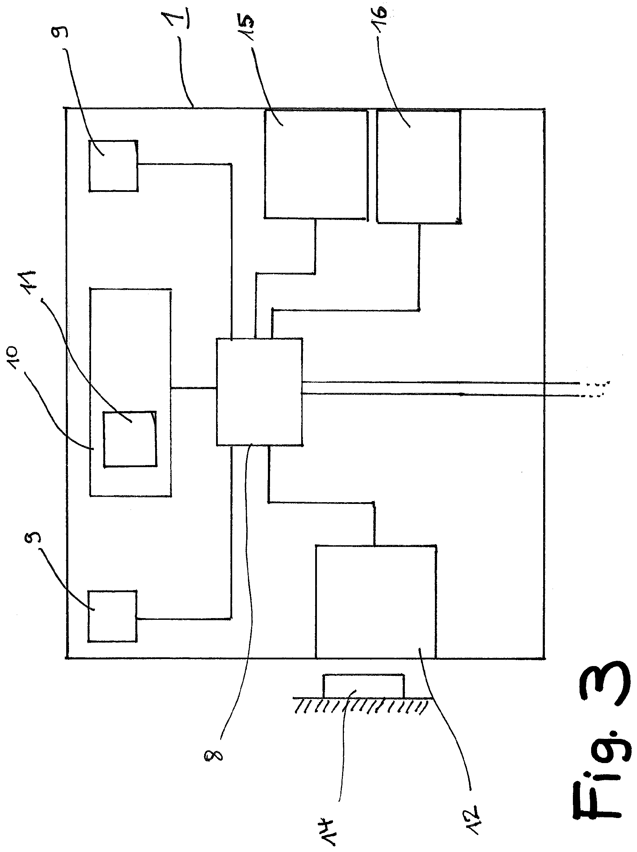

Die Sensorvorrichtung 1 weist eine Vielzahl von einzelnen Sensoreinheiten auf, die nachstehend in Verbindung mit der schematischen Darstellung in Fig. 3 beschrieben werden.

Fig. 3 zeigt in Form eines Blockschaltbilds weitere Einzelheiten der Sensorvorrichtung 1.

Die Sensorvorrichtung 1 umfasst eine Steuerungseinheit 8, die ausgebildet ist zur entsprechenden Ansteuerung der nachstehend noch beschriebenen Sensoreinheiten und Sensorelemente, sowie zur Aufnahme entsprechender Erfassungs- oder Messergebnisse und zur Durchführung einer (zumindest teilweise) Verarbeitung der ermittelten Daten (Parameter). Des Weiteren stellt die Steuerungseinheit 8 eine Schnittstelle zu einer außerhalb der Sensorvorrichtung 1 angeordneten weiteren Verarbeitungseinrichtung dar, die beispielsweise eine Steuerungseinrichtung einer Wascheinrichtung sein kann.

Die Sensorvorrichtung 1 umfasst zumindest einen Temperatursensor 9, mittels dessen die Temperatur des Mediums 6 (beispielsweise einer Waschlauge) gemessen wird. Es besteht ebenfalls die Möglichkeit, zwei oder mehrere Temperatursensoren verteilt in der Sensorvorrichtung anzuordnen.

Der zumindest eine Temperatursensor 9 oder eine Mehrzahl von Temperatursensoren 9 stellt die erste Sensoreinheit zur Erfassung einer Temperatur des Mediums 6 dar.

Eine zweite Sensoreinrichtung 10 ist in Form eines Füllstandsensors vorgesehen. Der Füllstandsensor umfasst eine Ultraschall-Sensoreinheit 11, die entsprechende Ultraschallwandler aufweist, zum Aussenden von Ultraschallsignalen und Empfangen entsprechender Reflexionssignale. Reflexionssignale können an einer Oberfläche des Mediums 6 gebildet werden, und in Abhängigkeit von der Laufzeit kann eine Füllhöhe und in Verbindung mit den Abmessungen des Behälters 4 eine Füllmenge bestimmt werden. Mit dem Temperatursensor 9 besteht die Möglichkeit, die erfasste Temperatur bei den Messungen durch den Füllstandsensor zu berücksichtigen. Ebenso können an Elementen innerhalb des Behälters 4 Referenzmessungen zum Kalibrieren des Füllstandsensors 10 durchgeführt werden.

Fig. 3 zeigt eine dritte Sensoreinheit 12, die entsprechende Sensorelemente aufweist zur Erfassung einer Bewegung des Behälters 4. Ist beispielsweise der Behälter 4 der Laugenbehälter einer Wascheinrichtung, kann während des Betriebs der Wascheinrichtung und insbesondere während des Schleuderns des Waschguts eine bestimmte Bewegung des gemäß Fig. 2 elastisch aufgehängten Behälters 4 auftreten. Diese Bewegungen des Behälters 4 können im Einzelnen in dreidimensionaler Weise erfasst werden, wobei die dritte Sensoreinheit 12 ein Magnetsensorelement 13 aufweist, das ein Magnetfeld erfassen kann. Ein Magnetfeld zur Erfassung durch das Magnetsensorelement 13 wird durch einen Magneten 14 bereitgestellt, der relativ zu dem beweglichen oder schwingungsfähigen Behälter 4 ortsfest angeordnet ist, so dass mittels der dritten Sensoreinheit 12 der Sensorvorrichtung 1 nach dem Einsetzen in den Behälter 4 (als das Funktionsmodul) eine Relativbewegung des Behälters 4 im Vergleich zu dem ortsfesten Magneten 14 erfasst werden kann. Der Magnet 14 entspricht somit dem außerhalb des Behälters 4 angeordneten festen Punkt.

Es besteht auf diese Weise eine Möglichkeit, eine Bewegung des Behälters 4 in Folge einer Beladung (Absenkung), wie einer Bewegung in Abhängigkeit von dem Schleudern und auch eine bei höheren Schleuderdrehzahlen ungünstige Unwucht innerhalb der Trommel 5 zu erfassen. Der Behälter 4 und die Trommel 5 führen gleichartige Bewegungen aus. Die Trommel 5 ist in dem Behälter 4 drehbar gelagert und wird mittels eines entsprechenden Antriebs angetrieben.

Der Magnet 14 ist in der Nähe der Sensorvorrichtung 1 und somit in der Nähe des Funktionsmoduls 2 und auch in der Nähe des Behälters 4 angeordnet, so dass die dritte Sensoreinheit 12 im Bereich des Magnetfelds des Magneten 14 liegt und die Bewegungen des Behälters 4 und damit auch seine aktuelle Position dreidimensional erfasst werden können.

Die Sensorvorrichtung 1 umfasst des Weiteren eine vierte Sensoreinheit 15 zur Erfassung von Eigenschaften des Mediums 6. Insbesondere umfasst die vierte Sensoreinheit 15 einen Sensor (Laugensensor) zur Erfassung von Eigenschaften beispielsweise einer Waschlauge oder eines Spülwassers bei der Anwendung in einer Wascheinrichtung, wobei das Verfahren der Impedanzspektroskopie sowie der Leitwertmessung zur Anwendung kommen kann. Es ist auf diese Weise möglich, die Eigenschaften des Mediums 6 und beispielsweise der Waschlauge kontinuierlich oder in kurzen Zeitabständen hinsichtlich Laugenkonzentration und Verschmutzungsgrad sowie Wasserhärte zu erfassen und einen mit der Wascheinrichtung durchgeführten Waschvorgang zu steuern oder zu regeln.

Der Sensor der vierten Sensoreinheit 15 kann somit durch seine Anordnung in der Sensorvorrichtung 1 und im Funktionsmodul vom Medium 6 umströmt sein, so dass eine verlässliche Messung gewährleist ist. Auch findet in der Position des Funktionsmoduls 2 gemäß Fig. 2 im unteren Teil des Behälters 4 eine Strömung des Mediums 6 statt, so dass nur mit einer geringen Wahrscheinlichkeit störende Ablagerungen entstehen.

Die Sensorvorrichtung 1 umfasst eine fünfte Sensoreinheit 16 zur Erfassung des Verschmutzungsgrads und kann beispielsweise in Form eines optischen Sensors (Trübungssensor) vorgesehen sein. Somit kann mittels der vierten Sensoreinheit 15 und der fünften Sensoreinheit 16 jeweils auf unterschiedliche Weise und mit unterschiedlicher Genauigkeit eine Trübung des Mediums und damit auch ein Verschmutzungsgrad ermittelt werden.

Mit der Anordnung von Fig. 3 ist somit die Sensorvorrichtung 1 in der Weise ausgestattet, dass eine Vielzahl von Sensoreinheiten und Sensorelementen in der Sensorvorrichtung 1 vorgesehen ist und somit eine Vielzahl von Messungen zur Bestimmung von Parametern sowohl des Mediums 6 als auch des Behälters 4 (eine Bewegung desselben) durchgeführt werden können.

Fig. 1 zeigt in vereinfachter und schematischer Weise die Anordnung der Sensorvorrichtung 1 in dem Funktionsmodul 2 gemäß dem ersten Ausführungsbeispiel.

### - Zweites Ausführungsbeispiel

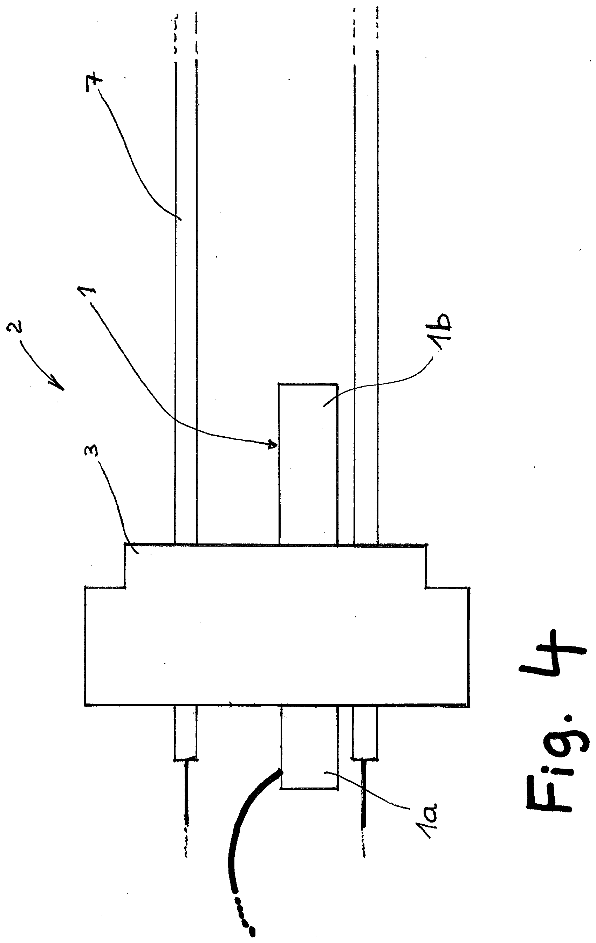

Demgegenüber zeigt Fig. 4 die Anordnung der Sensorvorrichtung 1 in dem Funktionsmodul 2 gemäß einem zweiten Ausführungsbeispiel der vorliegenden Erfindung. Das Funktionsmodul 2 ist in dem Behälter 4 mit entsprechenden Dichtungen eingesetzt, wobei in der Figur auf der rechten Seite der angedeuteten Wand des Behälters 4 das Medium das Funktionsmodul 2 und die Sensorvorrichtung 1 umströmt.

In dem Sockelelement 3 des Funktionsmoduls 2 ist die Sensorvorrichtung 1 derart angeordnet, dass ein Teil der Sensorvorrichtung 1 in den Behälter 4 hineinragt, während ein weiterer Teil der Sensorvorrichtung 1 auf der äußeren Seite des Sockelelements 3 angeordnet ist und somit außen freiliegt. In Verbindung mit der schematischen Darstellung in Fig. 3 ist die dritte Sensoreinheit 12 in einem äußeren Teil 1a der Sensorvorrichtung 1 angeordnet, wobei in der Nähe des äußeren Teils 1a der Sensorvorrichtung der Magnet 14 angeordnet ist, so dass dessen Magnetfeld, das mit einer Bewegung des Behälters 4 veränderlich ist, in entsprechender Weise erfasst und ausgewertet werden kann.

Ein innerer Teil 1b der Sensorvorrichtung 1, der auf der inneren Seite des Sockelelements 3 angeordnet ist und vom Medium 6 umströmt wird, umfasst die weiteren Sensoreinheiten gemäß Fig. 3, die unmittelbar im Medium 6 angeordnet sind bzw. von diesem umströmt werden müssen. Dies betrifft die erste Sensoreinheit zur Erfassung der Temperatur, die zweite Sensoreinheit zur Erfassung eines Füllstands, die vierte Sensoreinheit 15 zur Erfassung von Eigenschaften des Mediums 6 sowie die fünfte Sensoreinheit 16 zur Erfassung weiterer Eigenschaften des Mediums 6.

Ungeachtet dessen, dass die Sensorvorrichtung 1 eine Sensoreinheit (die dritte Sensoreinheit 12) aufweist, die Messungen durchführt relativ zu dem außerhalb des Behälters 4 liegenden festen Punkt, ist die kompakte Ausführung der Sensorvorrichtung 1 gewährleistet. Die Sensorvorrichtung 1 weist eine Anordnung mit einem äußeren Teil 1a und einem inneren Teil 1b auf, sowie eine entsprechende Verteilung der Sensoreinheiten gemäß Fig. 3 in Abhängigkeit von den jeweiligen Funktionen bzw. den zu erfassenden Parametern. Die Sensorvorrichtung 1 kann zweiteilig oder vorzugsweise einteilig ausgeführt sein.

### - Weitere Varianten

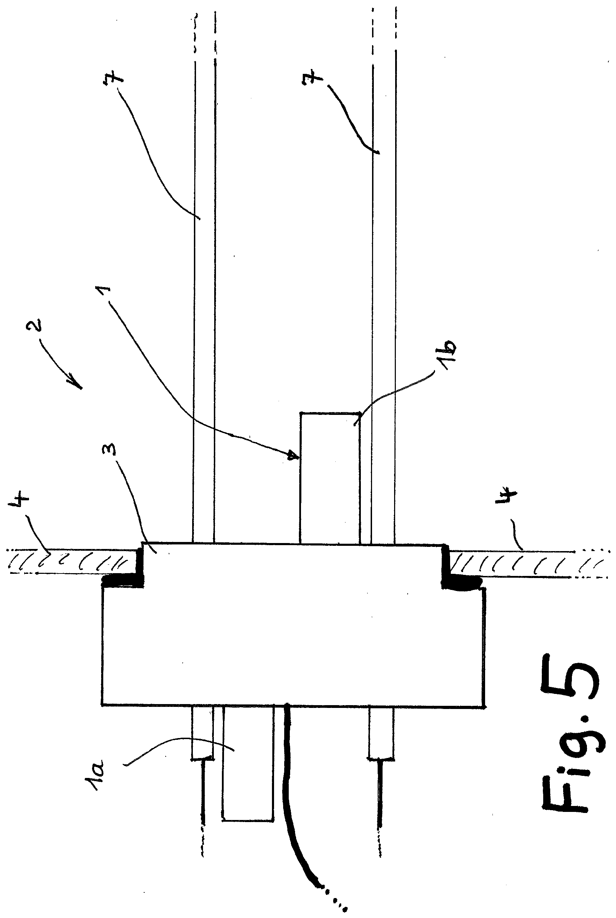

Fig. 5 zeigt im Vergleich zu Fig. 4 eine alternative Anordnung der Sensorvorrichtung 1 gemäß dem zweiten Ausführungsbeispiel, wobei die Sensorvorrichtung 1 zweiteilig ausgeführt ist und wobei der äußere Teil 1a und der innere Teil 1b an getrennten Stellen im Sockelelement 3 des Funktionsmodells 2 angeordnet sind. Auf diese Weise besteht die Möglichkeit einer flexibleren Anordnung der Sensorvorrichtung 1 in Verbindung mit dem Funktionsmodul 2 relativ zur Anordnung des Magneten 14 an einem festen Punkt außerhalb des Behälters 4. Der feste Punkt zur Anordnung des Magneten 14 ist beispielsweise eine Gehäusewand einer Wascheinrichtung oder eine sonstige Trägereinrichtung zum stabilen Tragen und Halten des Behälters 4.

Der Behälter 4 kann relativ zu den fest stehenden Magneten 14 beliebige Bewegungen in allen Freiheitsgraden in Verbindung mit einer Verdrehung um bestimmte kleine Winkel sowie ein Verkippen durchführen, wobei diese Bewegungen erfasst werden können. Seine Position wird kontinuierlich oder in kurzen Zeitabständen erfasst.

Der innere Teil 1b der Sensorvorrichtung 1 umfasst die weiteren Sensoren, wie sie in Verbindung mit dem zweiten Ausführungsbeispiel und Fig. 3 beschrieben sind.

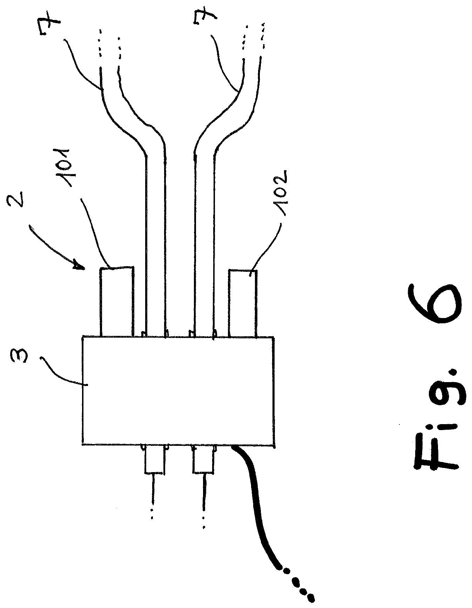

Fig. 6 zeigt eine alternative Anordnung der Sensorvorrichtung 1 in dem Funktionsmodul 2 im Vergleich zur Darstellung in Fig. 1.

Die Anordnung gemäß Fig. 6 zeigt in ähnlicher Weise wie in Fig. 5 eine Aufteilung der Sensorvorrichtung 1 in zwei getrennt angeordnete Teile. Im Einzelnen sind symmetrisch oder unsymmetrisch zur Anordnung der Heizelemente 7 ein erster Teil 101 und ein zweiter Teil 102 der Sensorvorrichtung 1 im Sockelelement 3 angeordnet. In der Darstellung gemäß Fig. 6 sind die beiden Teile 101 und 102 der Sensorvorrichtung 1 zu beiden Seiten der Heizelemente (Heizeinrichtung) 7 angeordnet, wobei die vorliegende Erfindung hierauf jedoch nicht beschränkt ist.

Es besteht die Möglichkeit, die Mehrzahl der Sensoreinheiten gemäß Fig. 3 in den beiden Teilen 101 und 102 der Sensorvorrichtung 1 zu verteilen, wobei in diesem Fall die Möglichkeit besteht, eine zur dritten Sensoreinheit 12 des ersten Ausführungsbeispiels alternative Sensoreinheit 12a in der Sensorvorrichtung 1 anzuordnen. Die alternative Sensoreinheit 12a kann die gleichen Erfassungen durchführen wie die dritte Sensorvorrichtung 12 gemäß der vorstehenden Beschreibung, wobei jedoch die Erfassung durchgeführt wird mittels einer entsprechenden Anzahl von Beschleunigungssensoren (zumindest ein Beschleunigungssensor), und ein Magnetsensor und ein Magnet zur Bereitstellung des entsprechenden Magnetfelds nicht erforderlich sind. Mittels der jeweiligen in alle Raumrichtungen empfindlichen Beschleunigungssensoren können die Bewegungen und zeitweilige Positionen des Behälters 4 in gleicher Weise bestimmt werden, so dass die Steuerungseinheit 8 nach einer entsprechenden Auswertung der Erfassungsergebnisse der alternativen Sensoreinheit 12a etwa gleiche Erfassungsergebnisse bereitstellen kann. Dies betrifft die Erfassung der Bewegungen des Behälters 4 im Hinblick auf eine Ladung, beim Zulaufen von Wasser, die Erfassung von allgemeinen Bewegungen während des Betriebs der Trommel 5 sowie insbesondere bei Schleudervorgängen mit den üblichen größeren Bewegungen.

In Verbindung mit Fig. 3 wurden die möglichen Sensoreinheiten zur Bildung der Sensorvorrichtung 1 beschrieben, wobei die vorliegende Erfindung hierauf jedoch nicht festgelegt ist und weitere Sensoren vorgesehen sein können, wie beispielsweise Sensoren zur Erfassung von Druck, wobei in Verbindung mit einem Druckwert auf einen Füllstand geschlossen werden kann. Die dritte Sensoreinheit 12 und die alternative Sensoreinheit 12a können jeweils Bewegungen des Behälters 4 in dreidimensionaler Weise einschließlich möglicher Kipp- und Neigungswinkel erfassen. Eine Erfassung einer Unwucht und damit einer Steuerung der weiteren Vorgänge, wie beispielsweise einer Drehzahl der Trommel 5 sind möglich.

Mit der vorliegenden Anordnung kann somit ein Funktionsmodul gebildet werden, dass einfach in einer Öffnung des Behälters 4 eingesetzt werden kann, wobei der Montageaufwand gering ist. Elektrische Anschlüsse können mit genormten Steckeinrichtungen (mehrpolige Steckeinrichtungen) gebildet werden. Die Sensorvorrichtung 1, die in das Funktionsmodul 2 eingesetzt wird, kann in kompakter Weise einteilig oder mehrteilig ausgeführt werden, wobei ungeachtet der mehrteiligen Ausführung eine einfache Herstellung gewährleistet ist und das Funktionsmodul 2 einfach montierbar ist.

Es besteht die Möglichkeit, in Abhängigkeit von verschiedenen Anwendungen die Sensorvorrichtung 1 mit entsprechenden Sensoreinheiten zu bestücken, wobei bestimmte Sensoreinheiten weggelassen werden können, wenn in Abhängigkeit von einer Anwendung betreffende Parameter nicht erfasst werden müssen. Somit kann die Sensorvorrichtung 1 in flexibler Weise ausgestaltet und an verschiedene Anwendungen angepasst werden. Ebenso ist die Anwendung nicht auf eine Wascheinrichtung beschränkt, vielmehr kann das Funktionsmodul bei einer Vielzahl anderer Geräte und Einrichtungen angewendet werden, bei denen die beschriebenen Parameter erfasst werden sollen.

## Patentansprüche

1. Funktionsmodul zur Erfassung von Parametern eines Mediums in einem Behälter, und des Behälters, mit
- einem Sockelelement (3) zum Einsetzen des Funktionsmoduls (3) in den Behälter (4),
- einer Sensorvorrichtung (1), die in das Sockelelement (3) eingesetzt ist und zumindest teilweise aus dem Sockelelement herausragt, wobei
- das Funktionsmodul in den Behälter (2) zur Durchführung der Erfassung einsetzbar ist,
- die Sensorvorrichtung (1) eine Mehrzahl von Sensoreinheiten (9, 10, 12, 15, 16) aufweist zur Erfassung unterschiedlicher Parameter des Mediums (6),
- die Sensorvorrichtung (1) eine Sensoreinheit (12) aufweist, die derart eingerichtet ist, dass diese eine dreidimensionale Bewegung des Behälters (2) relativ zu einem festen Punkt erfasst, und die Sensoreinheit (12) ein Magnetsensorelement (13) aufweist, das derart eingerichtet ist, dass dieses ein Magnetfeld eines mit dem festen Punkt verbundenen Magneten (14) zur Erfassung der dreidimensionalen Bewegung des Behälters (4) relativ zu dem Magneten (14) erfasst,
- das Sockelelement (3) eine innere Seite aufweist, die nach dem Einsetzen in dem Inneren des Behälters (4) liegt, und eine äußere Seite aufweist, die nach dem Einsetzen außerhalb des Behälters (4) liegt, und wobei die Sensorvorrichtung (1) derart in das Sockelelement (3) eingesetzt ist, dass der äußere Teil (1a) der Sensorvorrichtung außerhalb des Behälters (4) und der innere Teil (1b) innerhalb des Behälters (4) liegt und von dem Medium (6) umströmt wird, und
- die Sensoreinheit (12) zur Erfassung der dreidimensionalen Bewegung des Behälters (2) relativ zu dem festen Punkt in dem äußeren Teil (1a) der Sensorvorrichtung (1) angeordnet ist.

2. Funktionsmodul nach Anspruch 1, wobei die Sensorvorrichtung (1) eine erste Sensoreinheit (9) aufweist zur Erfassung einer Temperatur des Mediums (6), sowie eine zweite Sensoreinheit (10) aufweist zur Erfassung eines Füllstands eines Mediums (6) in dem Behälter (4).

3. Funktionsmodul nach Anspruch 1 oder 2, wobei die Sensorvorrichtung (1) eine vierte Sensoreinheit (15) aufweist zur Erfassung von Eigenschaften des Mediums (6).

4. Funktionsmodul nach Anspruch 2, wobei die zweite Sensoreinheit (1) Ultraschall-Sensorelemente aufweist zur Erfassung des Füllstands mittels Ultraschallsignalen.

5. Funktionsmodul nach Anspruch 3, wobei die vierte Sensoreinheit (15) eine Sensoreinrichtung aufweist zur Erfassung physikalischer und chemischer Eigenschaften des Mediums (6) mittels der Impedanzspektroskopie und/oder einer Leitwertmessung.

6. Funktionsmodul nach Anspruch 1, wobei die Sensorvorrichtung (1) eine fünfte Sensoreinheit (17) aufweist, die ein optisches Sensorelement umfasst zur Erfassung einer Trübung des Mediums (6).

7. Funktionsmodul nach einem der Ansprüche 1 bis 6, wobei die Sensorvorrichtung (1) eine Steuerungseinheit (8) aufweist zur Ansteuerung der Mehrzahl der Sensoreinheiten (9, 10, 12, 15, 16) und zur Aufnahme der jeweiligen erfassten Parameter des Mediums (6) und des Behälters (4).

## Claims

1. Functional module for detecting parameters of a medium in a container, and of the container, comprising
- a base element (3) for inserting the functional module (3) into the container (4),
- a sensor device (1), inserted in the base element (3) and projecting at least partially from the base element, wherein
- the functional module can be inserted into the container (2) for performing the detection,
- the sensor device (1) comprises a plurality of sensor units (9, 10, 12, 15, 16) for detecting different parameters of the medium (6),
- the sensor device (1) comprises a sensor unit (12) that is adapted to detect a three-dimensional movement of the container (2) relative to a fixed point, and the sensor unit (12) comprises a magnetic-sensor element (13) that is adapted to detect a magnetic field of a magnet (14) connected with the fixed point for detecting the three-dimensional movement of the container (4) relative to the magnet (14),
- the base element (3) has an inner side which, after insertion, lies inside the container (4) and has an outer side which, after insertion, lies outside the container (4) and wherein the sensor device (1) is inserted in the base element (3) in such a way that the outer part (1a) of the sensor device lies outside of the container (4) and the inner part (1b) lies within the container (4) and the medium (6) flows around it, and
- the sensor unit (12) for detecting the three-dimensional movement of the container (2) relative to the fixed point is arranged in the outer part (1a) of the sensor device (1).

2. The functional module according to claim 1, wherein the sensor device (1) comprises a first sensor unit (9) for detecting a temperature of the medium (6) as well as a second sensor unit (10) for detecting a fill level of a medium (6) in the container (4).

3. The functional module according to claim 1 or 2, wherein the sensor device (1) comprises a fourth sensor unit (15) for detecting properties of the medium (6).

4. The functional module according to claim 2, wherein the second sensor unit (1) comprises ultrasonic-sensor elements for detecting the fill level via ultrasonic signals.

5. The functional module according to claim 3, wherein the fourth sensor unit (15) comprises a sensor device for detecting physical and chemical properties of the medium (6) via impedance spectroscopy and/or conductometry.

6. The functional module according to claim 1, wherein the sensor device (1) comprises a fifth sensor unit (17) comprising an optical sensor element for detecting clouding of the medium (6).

7. The functional module according to any of claims 1 to 6, wherein the sensor device (1) comprises a control unit (8) for driving the plurality of sensor units (9, 10, 12, 15, 16) and for receiving the respectively detected parameters of the medium (6) and of the container (4).

## Revendications

1. Module fonctionnel pour l'acquisition de paramètres d'un milieu dans un conteneur, et du conteneur, avec
- un élément socle (3) pour agencer le module fonctionnel (3) dans le conteneur (4),
- un dispositif capteur (1) qui est agencé dans l'élément socle (3) et fait au moins partiellement saillie à partir de l'élément socle, dans lequel
- le module fonctionnel peut être agencé dans le conteneur (2) pour effectuer l'acquisition,
- le dispositif capteur (1) comporte une pluralité d'unités de capteur (9, 10, 12, 15, 16) pour acquérir différents paramètres du milieu (6),
- le dispositif capteur (1) comprend une unité de capteur (12) qui est configurée de manière à ce que celle-ci acquiert un déplacement tridimensionnel du conteneur (2) par rapport à un point fixe, et l'unité de capteur (12) comprend un élément capteur magnétique (13) qui est configuré de manière à ce que celui-ci acquiert un champ magnétique d'un aimant (14) associé au point fixe afin d'acquérir le déplacement tridimensionnel du conteneur (4) par rapport à l'aimant (14),
- l'élément socle (3) comporte un côté intérieur, qui se trouve à l'intérieur du conteneur (4) après l'agencement, et comporte un côté extérieur, qui se trouve à l'extérieur du conteneur (4) après l'agencement, et dans lequel le dispositif capteur (1) est agencé dans l'élément socle (3) de telle sorte que la partie supérieure (1a) du dispositif capteur se trouve à l'extérieur du conteneur (4) et la partie intérieure (1b) se trouve à l'intérieur du récipient (4) et est complètement entourée du milieu (6), et
- l'unité de capteur (12) est disposée dans la partie extérieure (1a) du dispositif capteur (1) pour acquérir le déplacement tridimensionnel du conteneur (2) par rapport au point fixe.

2. Module fonctionnel selon la revendication 1, dans lequel le dispositif capteur (1) comporte une première unité de capteur (9) pour acquérir une température du milieu (6), et une deuxième unité de capteur (10) pour acquérir un niveau de remplissage d'un milieu (6) dans le conteneur (4).

3. Module fonction selon la revendication 1 ou 2, dans lequel le dispositif capteur (1) comporte une quatrième unité capteur (15) pour acquérir des propriétés du milieu (6).

4. Module fonctionnel selon la revendication 2, dans lequel la deuxième unité de capteur (1) comprend des éléments capteurs à ultrasons pour détecter le niveau de remplissage au moyen de signaux ultrasonores.

5. Module fonctionnel selon la revendication 3, dans lequel la quatrième unité de capteur (15) comporte un dispositif capteur pour acquérir des propriétés physiques et chimiques du milieu (6) au moyen d'une spectroscopie d'impédance et / ou d'une mesure de conductivité.

6. Module fonctionnel selon la revendication 1, dans lequel le dispositif capteur (1) comporte une cinquième unité de capteur (17), qui comprend un élément capteur optique pour acquérir une turbidité du milieu (6).

7. Module fonctionnel selon l'une des revendications 1 à 6, dans lequel le dispositif capteur (1) comprend une unité de commande (8) pour commander la pluralité d'unités de capteur (9, 10, 12, 15, 16) et pour recevoir les paramètres acquis respectifs du milieu (6) et du conteneur (4).
